# EUROPÄISCHE PATENTSCHRIFT

(11) **EP 1 426 651 B1**
(45) Veröffentlichungstag und Bekanntmachung des Hinweises auf die Patenterteilung: **18.04.2007**
(21) Anmeldenummer: 02027114.4
(22) Anmeldetag: 04.12.2002
(51) Int. Cl.: F16F 13/26

(54) **Bypass-schaltbares Hydrolager**
Hydraulic support with switchable bypass
Support hydraulique à dérivation commutable

(43) Veröffentlichungstag der Anmeldung: 09.06.2004
(73) Patentinhaber: ContiTech Vibration Control GmbH, 30165 Hannover (DE)
(72) Erfinder: Uhrmeister, Bernhard, 30419 Hannover (DE)
(74) Vertreter: Finger, Karsten

(56) Entgegenhaltungen:
- US-A- 4 783 062
- US-A- 4 796 874
- US-A- 5 246 213

## Beschreibung

Die Erfindung betrifft ein bypass-schaltbares Hydrolager, insbesondere zur Verwendung als Motorlager in einem Kraftfahrzeug, - gemäß dem Oberbegriff des Hauptanspruchs.

### Stand der Technik

Am Markt sind verschiedene hydraulische Motorlager bekannt, bei denen die dynamische Lagersteifigkeit im Leerlaufbetrieb des Kraftfahrzeugs durch Öffnen eines Bypasses reduziert wird. Eine gängige Lösung besteht darin, eine Bohrung in der Düsenplatte des Lagers zu öffnen bzw. zu schließen, indem ein "Pfropfen" durch Federkraft gegen die Bohrung drückt und sie verschließt. Im Zustand "geöffnet" wird mit Vakuum ein Balg betätigt, der den Pfropfen gegen die Federkraft nach unten zieht.
Die Lösung mit Bohrung und Pfropfen ist nicht optimal, da der Pfropfen eine strömungsgünstige Flüssigkeitsschwingung behindert. Diese ist aber notwendig, um im Motorlager eine gute Schwingungstilgung und somit eine niedrige dynamische Steifigkeit zu bekommen.

In der DE 33 16 025 C2 wird ein Lager beschrieben, das eine Veränderbarkeit der Dämpfung zum Ziel hat. Dieses Lager weist neben Längsbohrungen auch einen Bypass auf, der mit Hilfe eines Elektromagneten geöffnet werden kann, womit sich die dynamische Steifigkeit verringert.
Nachteilig ist, dass die Strömungsführung nicht verlustarm realisiert ist. Nachteilig ist auch, dass die Betätigung in Richtung der schwingenden Flüssigkeitssäule wirkt. Im geschlossenen Zustand muss also eine relativ starke Feder den Stempel gegen die Bypassbohrung drücken. Dies hat zur Folge, dass zum Öffnen der Elektromagnet gegen diese relativ starke Feder arbeiten muss, also recht stark und somit groß und teuer ausgeführt sein muss. Auch im geöffneten Zustand fließt ein hoher Strom durch die Spule, wodurch sich das Lager stark erwärmt. Durch die Anordnung der Spule mit Anker baut das Lager recht hoch. Der Anker hat zwei Endanschläge. Beim Erreichen dieser Anschläge können Geräusche entstehen.

In den deutschen Patentschriften DE 198 07 868 C2 und DE 199 02 493 C2 werden Hydrolager beschrieben, bei denen jeweils ein Bypass wahlweise pneumatisch zugeschaltet werden kann.
Nachteilig ist, dass bei diesen Lösungen Vakuum benötigt wird. Von den meisten Automobilherstellern werden elektrisch betätigbare Ventileinrichtungen bevorzugt.

Eine andere Möglichkeit (GB 2 278 660 A) nutzt ein präzise gefertigtes Drehventil, das über eine abgedichtete Welle von außerhalb des Lagers pneumatisch betätigt wird. Nachteile: Betätigung durch Vakuum; nicht strömungsgünstig; Umschaltgeräusche.
Zur Vakuumbetätigung wird mindestens ein Magnetventil benötigt, das Kosten verursacht und im Package des Fahrzeugs untergebracht werden muss.
Diese Art Motorlager ist recht teuer, da geringe Toleranzen eingehalten werden müssen. Die Durchführung der Welle nach außen kann Dichtprobleme bereiten. Durch die Abdichtung der sich drehenden Welle werden recht hohe Betätigungsmomente nötig. Außerdem wird generell als nachteilig angesehen, dass bei dem bekannten Verfahren Vakuum benötigt wird. Die Verlegung von Vakuumleitungen ist teuer. Bei Beschädigung des Motorlagers bzw. der Leitungen ist eine Beeinträchtigung des ebenfalls pneumatisch betätigten Bremskraftverstärkers zu befürchten.
Wenn sich in Zukunft elektrisch betätigte Bremsen ("brake by wire") durchsetzen, dann haben Dieselfahrzeuge keine Vakuumpumpe mehr, die zur Ansteuerung pneumatisch betätigter Motorlager dienen könnte.

Die Offenlegungsschrift DE 199 02 494 A1 beschreibt ein Hydrolager, bei dem ebenfalls wahlweise ein Bypass geöffnet oder geschlossen werden kann. Zur Betätigung des Stößels zum Öffnen bzw. Schließen der Bypass-Durchtrittsöffnung ist ein Elektromotor nebst Untersetzungsgetriebe und ein Exzenter erforderlich.
Der apparative Aufwand für die Schaltbarkeit des Lagers erscheint unverhältnismäßig hoch. Bei einem billig hergestellten Getriebemotor ist die Zuverlässigkeit nicht gewährleistet.

Ein bypass-schaltbares Hydrolager mit den im Oberbegriff aufgezählten Merkmalen ist aus der US-Patentschrift 4,783,062 vorbekannt. Am Ende des dort beschriebenen Schiebers (32) ist ein Magnet (66) befestigt, der als Anker eines zur Bewegungsrichtung des Schiebers (32) axial angeordneten Hubmagneten (68) wirkt. Bei Strombeaufschlagung der Hubmagnet-Spule erfolgt die durch die Kraft des Ankers von dem Schieber vollzogene Bewegung in Flussrichtung des Hubmagneten, wobei der Anker so weit in die Spule hineingezogen wird, bis die potentielle Energie ihr Minimum erreicht hat. Fluchtet die auf dem Schieber (32) befindliche Bohrung (Öffnung, 76) mit der Bypassöffnung (62), so ist der Bypass geöffnet. Andernfalls ist der Bypass durch den Schieber (32) geschlossen.
Die Kraft eines derartigen Hubmagneten ist durch eine ziemlich nichtlineare Kennlinie charakterisiert. Davon abgesehen, ist auch sein axialer (longitudinaler) Hub in seiner Amplitude äußerst begrenzt. Würde man den Anker sehr weit aus der Spule herausziehen, um einen größeren Hub zu erzielen, dann käme man aus dem Anziehungsbereich der Spule heraus. Um trotzdem eine ausreichende Kraftwirkung zu realisieren, müsste die Spule beträchtlich überdimensioniert sein.
Die US-A-4,783,062 versucht, diesen Missstand durch Hintereinanderschalten mehrerer Spulen (69 - 72) zu mildem. Da die diversen Spulen (69, 70, 71, ...) jeweils separat angesteuert werden müssen, verteuert sich der gesamte Aufbau erheblich.

Die Antriebe von Bypass-Verschlussmechanismen gemäß US-A-4,796,874 und US-A-5,246,213 sind ebenfalls Hubmagneten und weisen damit die gleichen grundsätzlichen, aus der US-A-4,783,062 bekannten Nachteile auf.

### Aufgabe der Erfindung

Die Aufgabe der vorliegenden Erfindung besteht in der Beschreibung eines elektromagnetisch schaltbaren Hydrolagers, das preiswert herstellbar ist und das strömungsgünstig betätigt werden kann.

### Lösung und Vorteile

Die Erfindung bezieht sich auf eine Drosseleinheit in einer Trennplatte eines hydraulisch gedämpften Lagers. Trennplatten besitzen gewöhnlich einen Dämpfungskanal und eine Entkopplungseinheit. Zusätzlich enthält ein bypass-schaltbares Lager einen schaltbaren Bypass-Kanal, der im Leerlaufbetrieb des Fahrzeugs geöffnet wird und eine direkte Verbindung zwischen Arbeitskammer und Ausgleichskammer herstellt. Dadurch ergibt sich eine Absenkung der dynamischen Lagersteifigkeit und somit eine Verbesserung des Vibrationsverhaltens des Fahrzeugs.

Gemäß Anspruch 1 ist der Bypass mit Hilfe eines dünnen Schiebers zu öffnen und zu schließen. Dieser Schieber wird von einem mit Spule versehenen Magnetkreis betätigt. Elektrotechnisch gesehen handelt es sich um einen Linearantrieb, bei dem die Kraftwirkung auf einen stromdurchflossenen Leiter im Magnetfeld benutzt wird (Lorentzkraft).
Die erfindungsgemäße Antriebsart "Linearmotor" ist nicht auf einen translatorischen Schieber beschränkt sondern kann auf eine drehbar gelagerte Scheibe übertragen werden, wobei in einer Position durch zwei fluchtende Bohrungen ein Bypass geöffnet wird. Dabei befindet sich die Spule vorzugsweise auf einer Drehscheibe und macht eine Bewegung um einen gelagerten Drehpunkt.

Auch der Rückfluss des elektrischen Stroms kann zur Krafterzeugung genutzt werden, wenn sich dieser ebenfalls in einem Magnetfeld befindet, das allerdings umgekehrt gepolt sein muss. Nachteilig ist allerdings der größere Raumbedarf.

Auf die Dauerbestromung im Fahrbetrieb kann verzichtet werden, wenn eine Feder den Schieber in Position "Bypass geschlossen" hält. Dann ist allerdings ein stärkerer Magnetkreis nötig, um auch gegen die Federkraft zu arbeiten.

Anstatt eines Permanentmagneten kann auch eine Spule, die um den Eisenkreis gewickelt ist, das Magnetfeld erzeugen.

Um das Verhältnis Bypassfläche zu Schieberhub zu variieren, kann z. B. eine ovale Bypass-Geometrie gewählt werden. Insgesamt lässt sich eine strömungsgünstige und in der Dimension sehr variable Bypassgeometrie realisieren.
Vorteilhafterweise wird der Magnetantrieb innerhalb des Lagers installiert.

Im vorderen Bereich kann der Schieber dünner sein als im hinteren Bereich, der die Spule aufnimmt. Das ermöglicht sehr kurze Bypasskanäle und vermindert den Strömungswiderstand des Schiebers.

Den Bypass kann man sehr groß gestalten, da der Antrieb (z. B. im Gegensatz zum Hubmagneten) über den gesamten Hub mit der konstant großen Kraft arbeitet. Es ist daher auch eine Anwendung denkbar, bei der ein großer Bypass höherfrequent (> 100 Hz) abgestimmt wird (Bekämpfung von Booming im Fahrbetrieb bei bestimmten Drehzahlen).

Durch das Klemmen der Entkopplungsmembran in Stellung "Bypass offen" wird der Freiweg reduziert, wodurch sich eine Verbesserung de dynamischen Steifigkeit ergibt.

Eine Entkopplungsmembran verringert den durch das Öffnen des Bypasses erwünschten Effekt (Steifigkeitsreduzierung). Das Klemmen geschieht durch eine schräge Nase, z. B. seitlich des Schiebers. D. h.: Mit geringem Aufwand kann mit der Betätigung des Bypasskanals die Entkopplungsmembran ausgeschaltet werden.
Mit Hilfe eines inhomogenen Magnetfeldes, das die Endpositionen der Spule stärker durchflutet, kann die Haftreibung des Schiebers besser überwunden werden.

Durch einen Ausgleichsraum neben dem Schieber zur Aufnahme der verdrängten Flüssigkeit ergibt sich eine reibungsarme Lagerung des Schiebers.

Die kinematische Umkehrung des elektromagnetischen Schieberantriebs ist von der Erfindung mit umfasst. Danach ist eine Spule ortsfest an der Trennplatte angeordnet, während ein von der Spule angetriebener Permanentmagnet den an den Magneten gekoppelten Schieber mitbewegt. Da in diesem Fall die Spule ortsfest angeordnet ist, kann auch die Stromzufuhr fest verlegt werden.

### Zeichnungen

Ein Ausführungsbeispiel der Erfindung ist in den Zeichnungen dargestellt und in der nachfolgenden Beschreibung näher erläutert. Es zeigt:
Fig. 1 den Längsschnitt durch ein erfindungsgemäßes Hydrolager.
Fig. 2 bis Fig. 8 zeigen Details des erfindungsgemäß schaltbaren Bypasses.

### Beschreibung

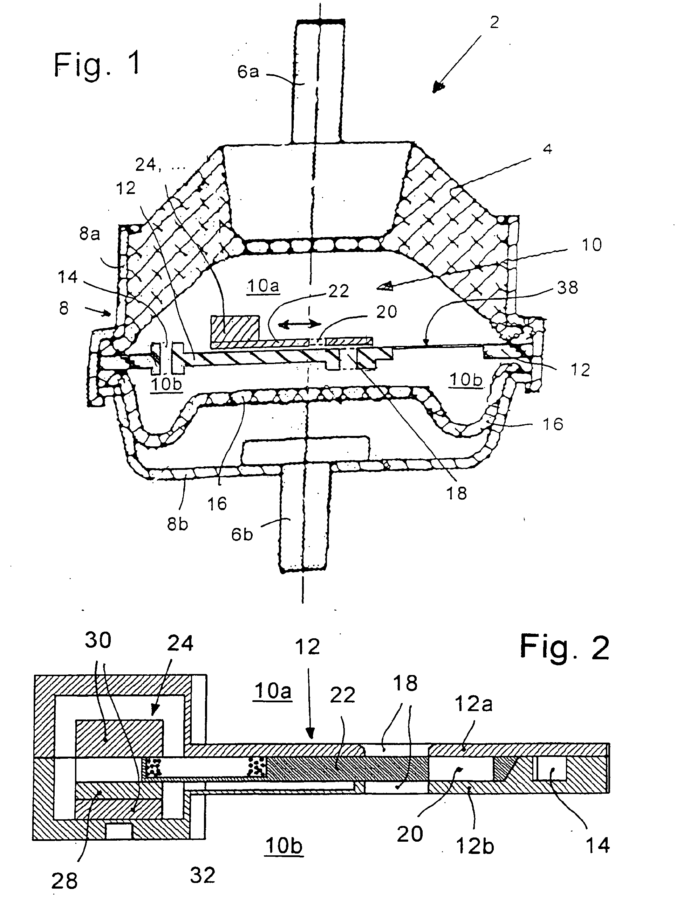

Das in der Fig. 1 dargestellte Ausführungsbeispiel eines erfindungsgemäß schaltbaren Hydrolagers 2 weist ein gummi-elastisches, rotationssymmetrisches Federelement 4 auf. Dieses Federelement 4 ist einerseits axial mit einem ersten Anschlussteil 6a und andererseits mit der zylindrischen Wandung 8a eines topfförmigen Gehäuses 8 verbunden. An den Boden 8b des topfförmigen Gehäuses 8 ist ein zweites Anschlussteil 6b montiert. Federelement 4 und topfförmiges Gehäuse 8 umschließen ein Hydraulik-Volumen 10. Das Hydraulik-Volumen 10 ist mittels einer Trennplatte (Trennwand, Düsenplatte) 12 in eine Arbeitskammer 10a und eine Ausgleichskammer 10b unterteilt. In dem dargestellten Ausführungsbeispiel weist die Trennplatte 12 einen Drosselkanal 14 auf, der die Arbeitskammer 10a mit der Ausgleichskammer 10b verbinden. Die Ausgleichskammer 10b ist mittels einer Membran 16 gegenüber der unter Atmosphärendruck stehenden Umgebung abgegrenzt.

Um insbesondere im Leerlaufbetrieb die Lagersteifigkeit eines elastisch abgestützten Motors durch Öffnen eines in der Trennplatte 12 befindlichen Bypasses 18 zu reduzieren, ist der Bypass-Öffnung 18 ein mit Querbohrung 20 versehener Schieber 22 zugeordnet (Einzelheiten: siehe Fig. 2 bis Fig. 8), wobei die Querbohrung 20 in der Weise mit der in der Trennwand 12 befindlichen Bypass-Öffnung 18 fluchtet, dass je nach Position der im Schieber 22 befindlichen Querbohrung 20 die in der Trennwand 12 befindliche Bypass-Öffnung 18 geschlossen oder geöffnet ist. D. h.: Die Schaltbarkeit des Bypasses 18 wird durch den mit Querbohrung 20 versehenen Schieber 22 realisiert.

Die in Fig. 2 im Schnitt dargestellte Trennplatte 12 besteht aus einer Ober- 12a und einer Unterhälfte 12b. Dazwischen sind der Schieber 22, der sich in einer Führung bewegen kann, und ein Magnetkreis 24. Die Querbohrung 20 des Schiebers 22 ist gegenüber der Bypass-Bohrung 18 verschoben, so dass der Bypass hier insgesamt geschlossen ist.

Der Antrieb des Schiebers 22 erfolgt elektro-magnetisch mittels der sogenannten LorentzKraft. Zu diesem Zweck weist das der Querbohrung 20 entgegengesetzte Ende des Schiebers 22 einen Magnetkreis 24 (magnetischer Fluss Φ, 26) auf.

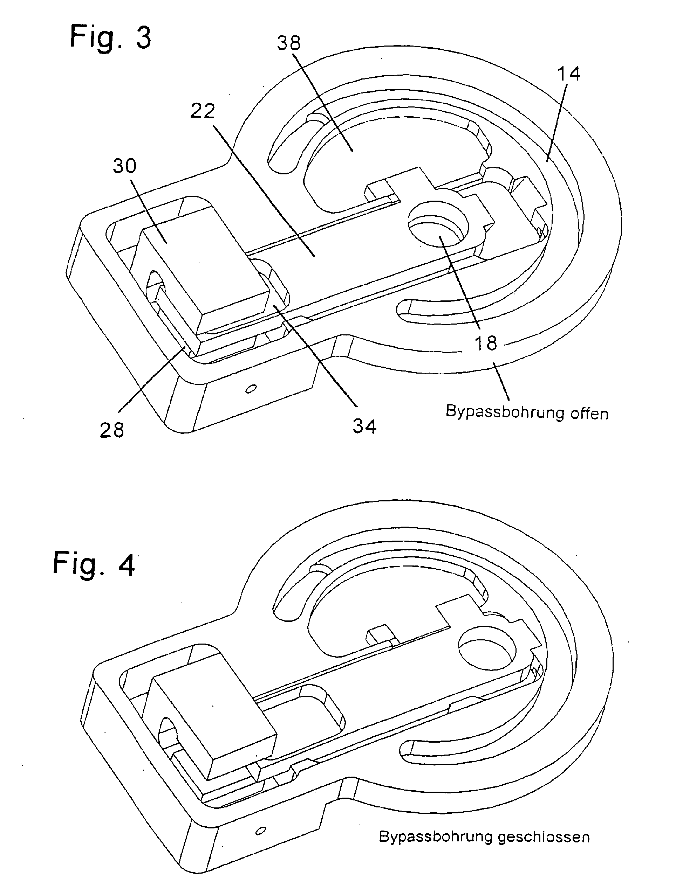

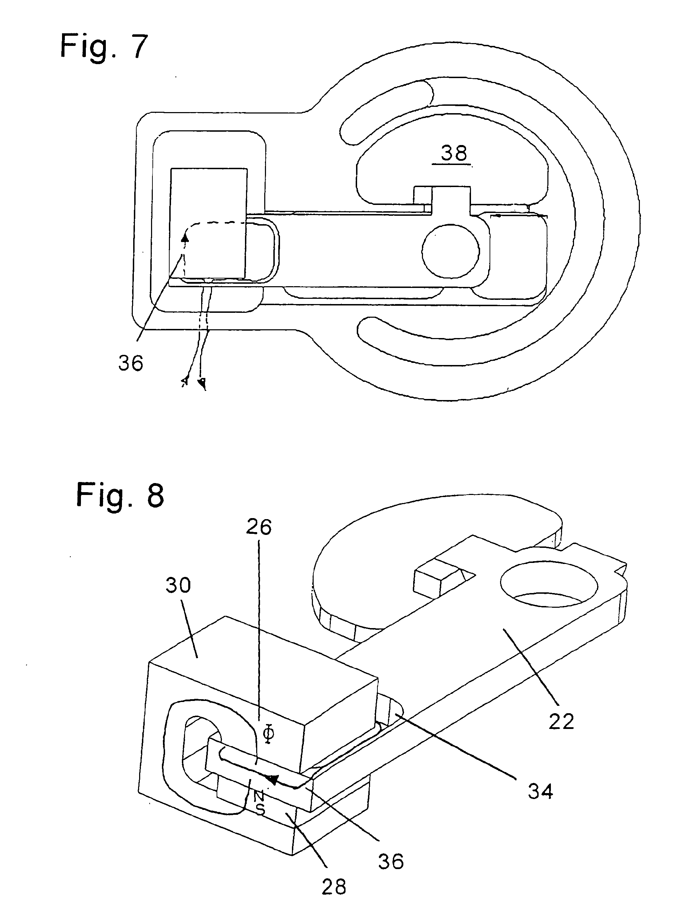

Der Magnetkreis 24 (Dauermagnetsystem) - links in Fig. 2 - besteht aus einem Permanentmagneten 28 und einem Eisenkreis 30, der die Polschuhe bildet und ein Magnetfeld (magnetischer Fluss Φ, 26) in dem Bereich erzeugt, in dem der hintere, mit einer Spule 32 versehene Teil des Schiebers 22 mit der Spule eintaucht (Spulentasche 34, Fig. 3 und Fig. 8). Der Schieber 22 ist aus nicht magnetischem Werkstoff gefertigt (A1 oder Kunststoff) und enthält eine in der Spulentasche 34 des Schiebers 22 befindliche Spule 32, die senkrecht zum Teil innerhalb des Magnetfeldes 26 verläuft. Der Rückfluss der Spule 32 muss bei dieser Ausführung außerhalb des Magnetfeldes 26 verlaufen. Beim Bestromen der Spule 32 wirkt eine Kraft in Längsrichtung des Schiebers 22 senkrecht zum Magnetfeld 26 und senkrecht zum elektrischen Strom I, 36 (Rechte-Hand-Regel). Wird umgepolt, so stellt sich eine entgegengesetzte Bewegungsrichtung ein.

Der kreisrunde Teil der Trennplattenhälften 12a, 12b wird unterhalb des Gummitragkörpers (Gummiteils, 4) angebracht, der eckige Teil mit dem Magnetkreis 24 außerhalb des Lagers 2.

Das Magnetfeld 26 muss nicht besonders homogen sein. Denkbar ist auch eine bewusst gestaltete Inhomogenität in der Art, dass die Felder für die Position "Bypass offen" und "Bypass geschlossen" größer sind als im mittleren Bereich der Bewegung. Damit könnte die Kraft zur Überwindung der etwas höheren Haftreibung erhöht werden.

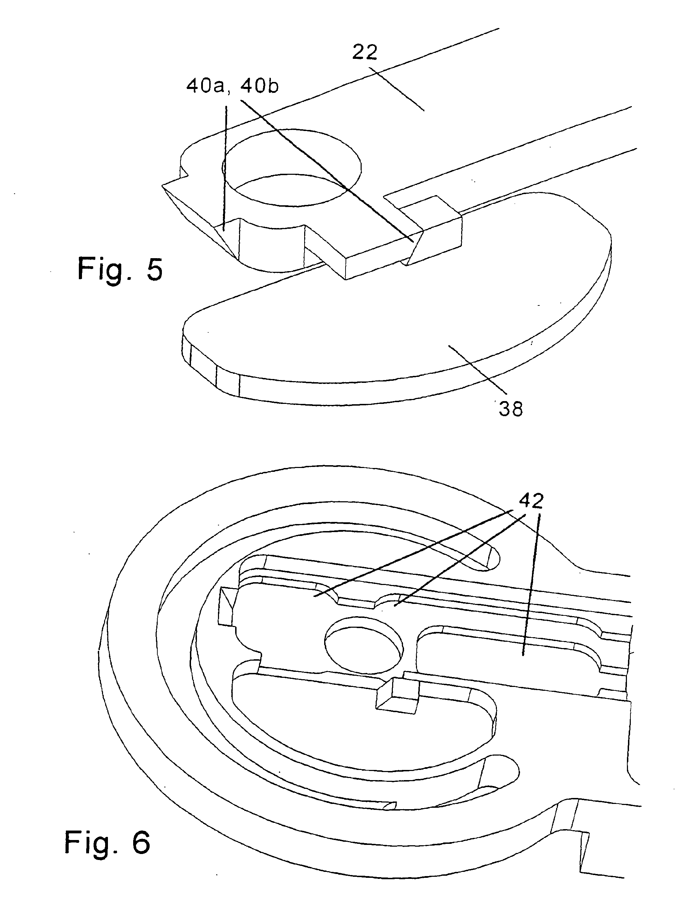

Gegen Ende der Bewegung des Schiebers 22 kann der Strom I, 36 verringert werden, um nur die Position des Schiebers 22 zu halten. In einer Position ist die Bohrung 20 des Schiebers 22 in Flucht mit der Bohrung (Bypass-Öffnung 18) der sie umgebenden Trennplatte 12 (Ober- und Unterteil der Trennplatte 12a, 12b, Fig. 2). Dadurch kann eine sehr strömungsgünstige Bypassgeometrie realisiert werden. Die Trennplatte 12 enthält noch den "normalen" langen Dämpfungskanal 14 (Fig. 2, rechts) und eine Entkopplungsmembran 38, die dafür sorgt, dass die Dämpfung erst bei größeren Schwingungsamplituden einsetzt. Das Problem bei Bypass-Lagern 2 ist, dass die Entkopplungsmembran 38 für den Bypassbetrieb auch aktiv ist und der erwünschte Effekt (Reduzierung der dynamischen Steifigkeit) gestört wird. Erfindungsgemäß wird mit Hilfe zweier schräger Nasen 40a, 40b in der Position "Bypass offen" die Entkopplungsmembran 38 geklemmt (Fig. 5) und somit unwirksam geschaltet wird. Der Winkel der Nasen 40a, 40b darf nicht so groß sein, dass sich beide Teile unlösbar festklemmen.

Prinzipiell nachteilig ist, dass der Schieber 22 bei Betätigung recht viel Fluid verdrängen muss und somit eine hohe Kraft (großes Magnetsystem) benötigt wird. Daher soll zur Reibungsverminderung neben dem Schieber 22 ein Ausgleichsraum 42 den Rückfluss der verdrängten Flüssigkeit widerstandsärmer gewährleisten. Die Kontur der Trennplatte 12 wird so ausgearbeitet, dass der Schieber 22 nur an wenigen Stellen eine direkte Auflagefläche hat, somit nur geringere Scherkräfte im Fluid entstehen (Fig. 6).

Im Zustand "Bypass geschlossen" könnten prinzipiell Geräusche durch das Schwingen der mit etwas Spiel ausgestatteten Passung Schieber/Führung auftreten. Dies wird durch eine schräge Nase 44 am Ende des Schiebers 22 verringert, die den Schieber 22 gegen den oberen Teil der Trennplatte 12 klemmt.

### Bezugszeichenliste

- 2: Hydrolager, hydraulisches Motorlager
- 4: Federelement, Gummiteil, Gummitragkörper
- 6a: erstes) Anschlussteil
- 6b: (zweites) Anschlussteil
- 8: topfförmiges Gehäuse
- 8a: zylindrische Wandung des topfförmigen Gehäuses (8)
- 8b: Boden des topfförmigen Gehäuses (8)
- 10: Hydraulik-Volumen
- 10a: Arbeitskammer
- 10b: Ausgleichskammer
- 12: Trennplatte, Trennwand, Düsenplatte
- 12a: obere Hälfte der Trennplatte (12)
- 12b: untere Hälfte der Trennplatte (12)
- 14; 14a, 14b: Drosselkanal, Dämpfungskanal
- 16: (Roll-)Membran
- 18: Bypass(-Öffnung), Bypass-Kanal
- 20: Querbohrung, Bohrung
- 22: Schieber
- 24: Magnetkreis
- 26: magnetischer Fluss, Magnetfeld
- 28: Permanentmagnet
- 30: Eisenkreis
- 32: Spule
- 34: Spulentasche
- 36: elektrischer Strom I
- 38: Entkopplungsmembran
- 40a, 40b: Nasen, Klemmnasen
- 42: Ausgleichsraum, Tasche(n) zur Reibungsverringerung
- 44: schräge Nase

## Patentansprüche

1. Bypass-schaltbares Hydrolager (2)
- insbesondere zur Verwendung als Motorlager in einem Kraftfahrzeug -
- mit einer Arbeitskammer (10a) und mit einer Ausgleichskammer (10b), die über mindestens einen in einer die Kammern (10a, 10b) separierenden Trennplatte (12) angeordneten Drosselkanal (14) und über einen dazu parallelgeschalteten, mittels eines mit elektromagnetischem Antrieb versehenen Ventils verschließbaren Bypass-Kanal (18) miteinander in Verbindung stehen,
- wobei die mit Hydraulikflüssigkeit gefüllten Volumina (10) von Arbeits- (10a) und Ausgleichskammer (10b) durch Be- und Entlastung eines Gummiteils (4) wechselweise veränderbar sind, und
- wobei das elektromagnetisch antreibbare Ventil entweder einen quer zum Bypasskanal (18) betätigbaren Schieber (22) oder eine quer zum Bypasskanal (18) angeordnete, um ihre vertikale Achse in Drehrichtung tangential antreibbare Kreisscheibe aufweist,
**dadurch gekennzeichnet,**
**dass** der elektromagnetische Antrieb des quer zum Bypasskanal (18) betätigbaren Schiebers (22) oder der quer zum Bypasskanal (18) angeordneten, tangential antreibbaren Kreisscheibe ein als Linearmotor ausgebildeter Linearantrieb ist, der einen ortsfesten Magnetkreis (24) mit einem Magnetfeld (26) und einen dem Schieber (22) oder der Scheibe zugeordneten, strombeaufschlagbaren Leiter,
oder der einen ortsfesten, strombeaufschlagbaren Leiter und einen dem Schieber (22) oder der Scheibe zugeordneten Magnetkreis (24) aufweist,
wobei der Kraftfluss Φ des Magnetfeldes (26), der Strom I (36) des strombeaufschlagbaren Leiters und die Bewegbarkeitsrichtung des Schiebers (22) oder die Scheiben-Tangente gemäß der Rechten-Hand-Regel jeweils senkrecht aufeinander stehen, und
wobei sich bei Strombeaufschlagung des Leiters eine Lorentzkraft (F = e v x B = 1I x B) in Richtung auf die Bewegbarkeit des Schiebers (22) oder in tangentialer Richtung der Scheibe ergibt.

2. Hydrolager nach Anspruch 1,
**dadurch gekennzeichnet,**
**dass** der Magnetkreis (24) mit dem Magnetfluss Φ (26) aus einem Permanentmagneten (28) und einem Polschuhe bildenden Eisenkreis (30) besteht, und
**dass** der stromdurchflossene Leiter von einer an den Schieber (22) angebrachten und zwischen den Polschuhen (30) senkrecht zum Magnetfluss Φ bewegbaren Spule (32) gebildet wird.

3. Hydrolager nach Anspruch 1 oder 2,
**dadurch gekennzeichnet,**
**dass** der Rückfluss des elektrischen Stroms I (36) mit einem entgegengesetzt gepolten Magneten in Wirkverbindung steht.

4. Hydrolager nach einem der Ansprüche 1 bis 3,
**gekennzeichnet durch**
eine Rückholfeder zur Erzeugung der Position "Bypass geschlossen" bei stromlosem Linearantrieb.

5. Hydrolager nach Anspruch 4,
**dadurch gekennzeichnet,**
**dass** statt einer Rückholfeder - oder zusätzlich - eine Einrichtung zur Richtungsänderung des durch die Spule (32) fließenden Stroms I (36) vorgesehen ist, wodurch eine Antriebsumkehrung am Schieber (22) ermöglicht wird.

6. Hydrolager nach einem der Ansprüche 1 bis 5,
**dadurch gekennzeichnet,**
**dass** der Magnetkreis (24) durch einen Permanentmagneten (28) oder durch einen Elektromagneten realisiert ist.

7. Hydrolager nach einem der Ansprüche 1 bis 6,
**dadurch gekennzeichnet,**
**dass** die Bypass-Öffnung (18) eine ovale oder elliptische Querschnittsfläche aufweist.

8. Hydrolager nach einem der Ansprüche 1 bis 7,
**dadurch gekennzeichnet,**
**dass** der Schieber (22) oder die Scheibe eine Bohrung (20) aufweist, die im geöffneten Zustand des Bypasskanals (18) zu dessen Bypass-Öffnung korrespondiert.

9. Hydrolager nach einem der Ansprüche 1 bis 8,
**dadurch gekennzeichnet,**
**dass** der Magnetkreis (24) innerhalb des Lagers (2) angeordnet ist.

10. Hydrolager nach einem der Ansprüche 1 bis 9,
**dadurch gekennzeichnet,**
**dass** der Schieber (22) im Bereich der Bohrung (20) dünner ist als im hinteren Bereich, der die Spule (32) aufnimmt.

11. Hydrolager nach einem der Ansprüche 1 bis 10,
**dadurch gekennzeichnet,**
**dass** die Umschaltung von "Bypass geöffnet" zu "Bypass geschlossen" höherfrequent (> 100 Hz) abgestimmt ist.

12. Hydrolager nach einem de Ansprüche 1 bis 11,
**dadurch gekennzeichnet,**
**dass** der Schieber (22) zwei schräggestellte Nasen (40a, 40b) aufweist, mit deren Hilfe eine Entkopplungsmembran (38) in der Position "Bypass offen" eingeklemmt und somit unwirksam geschaltet wird.

13. Hydrolager nach einem der Ansprüche 1 bis 12,
**dadurch gekennzeichnet,**
**dass** das Magnetfeld (26) zur Überwindung der Haftreibung des Schiebers (22) inhomogen gestaltet ist.

14. Hydrolager nach einem der Ansprüche 1 bis 13,
**gekennzeichnet durch**
einen Ausgleichsraum (42) neben dem Schieber (22) zur Aufnahme von verdrängter Flüssigkeit.

15. Hydrolager nach einem der Ansprüche 1 bis 14,
**gekennzeichnet durch**
eine schräge Nase (44) am Ende des Schiebers (22), wodurch der Schieber (22) gegen den oberen Teil der Trennplatte (12) klemmt.

## Claims

1. Bypass-switchable hydraulic mount, (2),
- in particular for use as an engine mount in a motor vehicle,
- with a working chamber (10a) and with a compensating chamber (10b),
which are connected to one another via at least one throttle duct (14) arranged in a separating plate (12) separating the chambers (10a, 10b) and via a bypass duct (18) connected in parallel to the said throttle duct and closable by means of a valve provided with an electromagnetic drive,
- the volumes (10), filled with hydraulic fluid, of the working chamber (10a) and compensating chamber (10b) being alternately variable by the loading and relieving of a rubber part (4), and
- the electromagnetically drivable valve having either a slide (22) actuable transversely to the bypass duct (18) or a circular disc arranged transversely to the bypass duct (18) and driveable tangentially about its vertical axis in the direction of rotation,
**characterized in**
**that** the electromagnetic drive of the slide (22) actuable transversely to the bypass duct (18) or of the tangentially drivable circular disk arranged transversely to the bypass duct (18) is a linear drive which is designed as a linear motor and which has a fixed magnetic circuit (24) with a magnetic field (26) and a current-loadable conductor assigned to the slide (22) or to the disc,
or which has a fixed current-loadable conductor and a magnetic circuit (24) assigned to the slide (22) or to the disc,
the force flux Φ of the magnetic field (26), the current I (36) of the current-loadable conductor and the direction of moveability of the slide (22) or the disc tangent being in each case perpendicular to one another according to the right-hand rule, and,
when the conductor is loaded with current, a lorentz force (F=evxB = 1IxB) arising in the direction of moveability of the slide (22) or in the tangential direction of the disc.

2. Hydraulic mount according to Claim 1,
**characterized in**
**that** the magnetic circuit (24) having the magnetic flux Φ (26) consists of a permanent magnet (28) and of a ferromagnetic circuit (30) forming pole pieces, and
**that** the current-flow conductor is formed by a coil (32) attached to the slide (22) and moveable between the pole pieces (30) perpendicularly to the magnetic flux Φ.

3. Hydraulic mount according to Claim 1 or 2,
**characterized in**
**that** the return of the electrical current I (36) is operatively connected to a magnet having opposite polarity.

4. Hydraulic mount according to one of Claims 1 to 3,
**characterized by**
a restoring spring for generating the "bypass closed" position when the linear drive is currentless.

5. Hydraulic mount according to Claim 4,
**characterized in**
**that**, instead of a restoring spring, or in addition, a device for changing the direction of the current I (36) flowing through the coil (32) is provided, with the result that a reversal of the drive on the slide (22) becomes possible.

6. Hydraulic mount according to one of Claims 1 to 5,
**characterized in**
**that** the magnetic circuit (24) is formed by a permanent magnet (28) or by an electromagnet.

7. Hydraulic mount according to one of Claims 1 to 6,
**characterized in**
**that** the bypass orifice (18) has an oval or elliptic cross-sectional area.

8. Hydraulic mount according to one of Claims 1 to 7,
**characterized in**
**that** the slide (22) of the disc has a bore (20) which, in the open state of the bypass duct (18), matches with the bypass orifice of the latter.

9. Hydraulic mount according to one of Claims 1 to 8,
**characterized in**
**that** the magnetic circuit (24) is arranged within the mount (2).

10. Hydraulic mount according to one of Claims 1 to 9,
**characterized in**
**that** the slide (22) is thinner in the region of the bore (20) than in the rear region which receives the coil (32).

11. Hydraulic mount according to one of Claims 1 to 10,
**characterized in**
**that** the changeover from "bypass open" to "bypass closed" is tuned to a higher frequency (> 100 Hz).

12. Hydraulic mount according to one of Claims 1 to 11,
**characterized in**
**that** the slide (22) has two obliquely set noses (40a, 40b), with the aid of which a decoupling diaphragm (38) is clamped in the "bypass open" position and is thus switched to inactive.

13. Hydraulic mount according to one of Claims 1 to 12,
**characterized in**
**that** the magnetic field (26) has an inhomogeneous configuration in order to overcome the static friction of the slide (22).

14. Hydraulic mount according to one of Claims 1 to 13,
**characterized by**
a compensating space (42), next to the slide (22), for the reception of displaced fluid.

15. Hydraulic mount according to one of Claims 1 to 14,
**characterized by**
an oblique nose (44) at the end of the slide (22), with the result that the slide (22) clamps against the upper part of the separating plate (12).

## Revendications

1. Palier hydraulique à dérivation commutable (2),
- en particulier à utiliser comme palier de moteur dans un véhicule automobile,
- avec une chambre de travail (10a) et avec une chambre d'équilibrage (10b), qui sont en communication l'une avec l'autre par au moins un canal d'étranglement (14) disposé dans une plaque de séparation (12) séparant les chambres (10a, 10b) et par un canal de dérivation (18) parallèle à celui-ci et pouvant être fermé au moyen d'une vanne dotée d'un entraînement électromagnétique,
- dans lequel les volumes (10) remplis de liquide hydraulique de la chambre de travail (10a) et de la chambre d'équilibrage (10b) sont variables en alternance par charge et détente d'une pièce de caoutchouc (4), et
- dans lequel la vanne à entraînement électromagnétique comprend soit un tiroir (22) à actionner transversalement au canal de dérivation (18) soit un disque circulaire à entraînement tangentiel dans un sens de rotation autour de son axe vertical et disposé transversalement au canal de dérivation (18),
**caractérisé en ce que**
- l'entraînement électromagnétique du tiroir (22) à actionner transversalement au canal de dérivation (18) ou du disque circulaire à entraînement tangentiel disposé transversalement au canal de dérivation (18) est un entraînement linéaire formé par un moteur linéaire, qui comprend un circuit magnétique fixe (24) avec un champ magnétique (26) et un conducteur pouvant être parcouru par un courant associé au tiroir (22) ou au disque,
ou qui comprend un conducteur fixe pouvant être parcouru par un courant et un circuit magnétique (24) associé au tiroir (22) ou au disque,
dans lequel le flux de force Φ du champ magnétique (26), le courant I (36) du conducteur pouvant être parcouru par un courant et la direction de déplacement du tiroir (22) ou la tangente au disque sont chaque fois perpendiculaires l'un à l'autre selon la règle des trois doigts de la main droite, et
dans lequel, lorsque le conducteur est parcouru par un courant, il s'établit une force de Lorentz (F = e v x B = 1 I x B) dans la direction du déplacement du tiroir (22) ou dans la direction tangentielle du disque.

2. Palier hydraulique selon la revendication 1,
**caractérisé en ce que** le circuit magnétique (24) avec le flux magnétique Φ (26) est composé d'un aimant permanent (28) et d'un circuit de fer (30) formant des pièces polaires, et **en ce que** le conducteur parcouru par un courant est formé par une bobine (32) montée sur le tiroir (22) et mobile entre les pièces polaires (30) perpendiculairement au flux magnétique Φ.

3. Palier hydraulique selon la revendication 1 ou 2, **caractérisé en ce que** le reflux du courant électrique I (36) est en liaison active avec un aimant de polarité opposée.

4. Palier hydraulique selon l'une quelconque des revendications 1 à 3, **caractérisé par** un ressort de retenue pour produire la position "Dérivation fermée" lorsque l'entraînement linéaire est sans courant.

5. Palier hydraulique selon la revendication 4,
**caractérisé en ce que**, au lieu ou en plus d'un ressort de retenue, il est prévu un dispositif de changement du sens du courant I (36) circulant à travers la bobine (32), ce qui permet une inversion de l'entraînement du tiroir (22).

6. Palier hydraulique selon l'une quelconque des revendications 1 à 5, **caractérisé en ce que** le circuit magnétique (24) est formé par un aimant permanent (28) ou par un électroaimant.

7. Palier hydraulique selon l'une quelconque des revendications 1 à 6, **caractérisé en ce que** l'ouverture de dérivation (18) présente une section transversale ovale ou elliptique.

8. Palier hydraulique selon l'une quelconque des revendications 1 à 7, **caractérisé en ce que** le tiroir (22) ou le disque présente un perçage (20), qui correspond à l'ouverture de dérivation du canal de dérivation (18) lorsque celui-ci est dans son état ouvert.

9. Palier hydraulique selon l'une quelconque des revendications 1 à 8, **caractérisé en ce que** le circuit magnétique (24) est disposé à l'intérieur du palier (2).

10. Palier hydraulique selon l'une quelconque des revendications 1 à 9, **caractérisé en ce que** le tiroir (22) est plus mince dans la région du perçage (20) que dans la zone arrière, qui accueille la bobine (32).

11. Palier hydraulique selon l'une quelconque des revendications 1 à 10, **caractérisé en ce que** la commutation de "Dérivation ouverte" à "Dérivation fermée" est réglée à haute fréquence (> 100 Hz).

12. Palier hydraulique selon l'une quelconque des revendications 1 à 11, **caractérisé en ce que** le tiroir (22) comporte deux nez obliques (40a, 40b), à l'aide desquels une membrane de séparation (38) est pincée dans la position "Dérivation ouverte" et est ainsi rendue inactive.

13. Palier hydraulique selon l'une quelconque des revendications 1 à 12, **caractérisé en ce que** le champ magnétique (26) a une structure hétérogène pour vaincre le frottement statique du tiroir (22).

14. Palier hydraulique selon l'une quelconque des revendications 1 à 13, **caractérisé par** une chambre d'équilibrage (42) à côté du tiroir (22) destinée à recevoir le liquide déplacé.

15. Palier hydraulique selon l'une quelconque des revendications 1 à 14, **caractérisé par** un nez oblique (44) à l'extrémité du tiroir (22), permettant de serrer le tiroir (22) contre la partie supérieure de la plaque de séparation (12).
